# EUROPÄISCHE PATENTSCHRIFT

(11) **EP 2 898 317 B1**
(45) Veröffentlichungstag und Bekanntmachung des Hinweises auf die Patenterteilung: **08.11.2017**
(21) Anmeldenummer: 13770427.6
(22) Anmeldetag: 23.09.2013
(51) Int. Cl.: G01N 27/12

(54) **SENSORANORDNUNG UND VERFAHREN ZUM HERSTELLEN EINER SENSORANORDNUNG**
SENSOR ARRANGEMENT AND METHOD FOR PRODUCING A SENSOR ARRANGEMENT
ENSEMBLE CAPTEUR ET PROCEDE DE PRODUCTION D'UN ENSEMBLE CAPTEUR

(30) Priorität: 24.09.2012 DE 102012108997
(43) Veröffentlichungstag der Anmeldung: 29.07.2015
(73) Patentinhaber: Schüle, Christiane, 40547 Düsseldorf (DE)
(72) Erfinder: SCHIERBAUM, Klaus, 47803 Krefeld (DE); SCHÜLE, Christiane, 40547 Düsseldorf (DE); CAKABAY, Ömer, 40223 Düsseldorf (DE)
(74) Vertreter: Michalski Hüttermann & Partner Patentanwälte mbB
(86) Internationale Anmeldenummer: PCT/EP2013/069667
(87) Internationale Veröffentlichungsnummer: WO 2014/044835

(56) Entgegenhaltungen:
- EP-A1- 0 709 671
- WO-A2-2006/120409
- DE-A1- 3 624 217
- KR-A- 20100 085 321

## Beschreibung

Die vorliegende Erfindung betrifft eine Sensoranordnung, insbesondere für einen Gassensor oder für einen Flüssigkeitssensor. Die vorliegende Erfindung betrifft ferner ein Verfahren zum Herstellen einer Sensoranordnung.

Sensoren, wie beispielsweise Gassensoren, sind weit verbreitet und für viele Anwendungsgebiete bekannt. Beispielsweise werden Gassensoren verwendet, die auf dem flüssigelektrochemischen Prinzip oder auf dem Prinzip der Wärmeleitung basieren. Ferner sind Gassensoren bekannt, die MOS-Kondensatoren und Kapazitätsmessungen, Schottkydioden und Strom-/Spannungsmessungen, Feldeffekttransistoren, geheizte halbleitende Metalloxide und elektrische Widerstands- oder Leitfähigkeitsmessungen, oder auch ionenleitende Membrane und Potentialmessungen als Detektionsprinzip ausnutzen.

Aus dem Dokument WO 2012/100979 A1 ist ein Betriebsverfahren für einen Gassensor und ein Gassensor bekannt. Bei einem derartigen Betriebsverfahren wird der Gassensor während einer Messphase mit einem zu vermessenden Gas beaufschlagt und während einer Regenerationsphase kann das zu vermessende Gas von dem Sensor desorbieren. Hierzu ist der Gassensor ein Feldeffekttransistor basierter Gassensor (GasFET). Ein derartiger Sensor weist eine Platine auf, auf der ein Gaskanal angeordnet ist. In dem Gaskanal ist ein Stickoxidsensor angeordnet, der eine sensitive Schicht und eine Heizvorrichtung umfasst.

DE 10 2006 020 253 B3 beschreibt einen Titandioxidsensor zur Messung von Konzentrationen reduzierender Gase wie Wasserstoff, Methan oder Ammoniak. Der Sensor gemäß dieser Druckschrift besteht aus wenigstens zwei Lagen polykristallinen Titandioxids auf einem beliebigen Substrat, welches den Endtemperaturen von etwa 500°C zur Kristallisierung der Schichten standhalten soll. Die wenigstens zwei Lagen Titandioxid sind übereinander angeordnet, wobei die äußere Lage, welche die Oberfläche des Sensors zum Gasraum bildet, mit Katalysatorpartikeln versehen ist, die sich im Bereich der Korngrenzen befinden, und wobei die unmittelbar darunter angeordnete Lage mit einem Alkalimetall angereichert ist. Dabei soll ein derartiger Sensor hauptsächlich Anatas-Titandioxid enthalten. Die Herstellung der entsprechenden Lagen erfolgt durch Spincoating oder einen anderen Sol-Gel-Beschichtungsschritt. KR 2010 0085321 A beschreibt einen planar aufgebauten Metalloxid-basierten Gassensor dessen Mittelschicht eine poröse Struktur aufweist und durch Partikel einer gewissen Korngröße gebildet wird.

EP 0 709 671A1 offenbart einen festelektrolytischen Sauerstoffsensor, der eine becherförmige Struktur aufweist. Zwischen einer Innen- und einer Außenelektroden ist ein Festelektrolyt angeordnet, der ab ein gewissen Temperatur für Sauerstoffionen leitfähig ist.

Die vorgenannten Sensoren weisen jedoch bezüglich mancher Anwendungen noch Verbesserungspotential bezüglich ihrer Selektivität und insbesondere Sensitivität auf.

Es ist daher die Aufgabe der vorliegenden Erfindung, einen Sensor zu schaffen, der auf einfache und/oder kostengünstige Weise herstellbar ist, und/oder der eine verbesserte Sensitivität und/oder Selektivität aufweist.

Diese Aufgabe wird durch eine Sensoranordnung gemäß Anspruch 1 gelöst. Diese Aufgabe wird ferner durch ein Verfahren zum Herstellen einer Sensoranordnung gemäß Anspruch 11 gelöst. Bevorzugte Ausführungsformen der Erfindung sind in den Unteransprüchen angegeben.

Gegenstand der vorliegenden Erfindung ist eine Sensoranordnung mit einer Schichtanordnung, wobei die Schichtanordnung eine Grundschicht, eine Mittelschicht und eine Deckschicht aufweist, wobei die Mittelschicht zumindest teilweise auf der Grundschicht angeordnet ist und mit dieser in Kontakt steht und wobei die Deckschicht zumindest teilweise auf der Mittelschicht angeordnet ist und mit dieser in Kontakt steht, wobei die Grundschicht und die Deckschicht für eine Leitfähigkeitsmessung und/oder eine Widerstandsmessung elektrisch kontaktierbar sind, wobei die Mittelschicht porös ist, wobei die Deckschicht porös ist und eine aktive Messoberfläche aufweist, und wobei die Schichtanordnung eine nicht-planare Ausrichtung aufweist.

Unter einer "Schichtanordnung" kann im Sinne der vorliegenden Erfindung insbesondere eine Anordnung aus mehreren aufeinanderfolgenden Schichten verstanden werden. Dabei können die einzelnen Schichten jeweils als Einzelschicht oder aus einer Mehrzahl an Teilschichten aufgebaut sein. Ferner können die einzelnen Schichten unmittelbar aufeinander angeordnet sein und so insbesondere elektrisch miteinander in Kontakt stehen, oder aber durch eine geeignete Zwischenlage beziehungsweise Zwischenschicht aufeinander angeordnet und miteinander verbunden sein beziehungsweise insbesondere elektrisch in Kontakt stehen. Unter einer Schicht als solcher kann dabei ferner im Sinne der vorliegenden Erfindung insbesondere jede Lage verstanden werden, die jede geeignete Form, Dicke und Gestaltung aufweisen kann.

Unter einer "Grundschicht" im Sinne der vorliegenden Erfindung kann insbesondere eine Trägerschicht verstanden werden, auf der weitere Schichten angeordnet sind. Die Grundschicht kann dabei selbstragend sein, also etwa selbst eine ausreichende Stabilität aufweisen, um etwa sich selbst oder auch der Schichtanordnung eine ausreichende Stabilität zu verleihen. Ferner kann die Grundschicht als unterste Schicht des Sensors ausgestaltet sein, oder auch auf einem Substrat aufgebracht sein. In diesem Fall ist das Substrat insbesondere nicht elektrisch leitend und kann etwa aus Kunststoff, Glas oder einer Keramik ausgebildet sein. Insbesondere, wenn die Grundschicht eine ausreichende Dicke aufweist, kann auf das Vorsehen eines Substrats, auf dem die Grundschicht angeordnet ist, verzichtet werden. Die Grundschicht kann in dem erfindungsgemäßen Sensor insbesondere als untere Elektrode beziehungsweise Rückelektrode dienen, die in an sich bekannter Weise elektrisch kontaktierbar ist.

Unter einer "Mittelschicht" kann im Sinne der vorliegenden Erfindung insbesondere eine Schicht verstanden werden, welche zwischen der Grundschicht und der Deckschicht angeordnet ist. Die Mittelschicht ist dabei vorzugsweise unmittelbar auf der Grundschicht angeordnet und steht so mit dieser in Kontakt. Dabei kann die Mittelschicht die Grundschicht vorzugsweise vollständig oder auch nur teilweise überdecken und ist somit insbesondere zumindest teilweise auf der Grundschicht angeordnet. Die Mittelschicht ist dabei insbesondere porös und weist dabei insbesondere eine offene Porosität auf. Dadurch ergibt sich eine vergrößerte Kontaktfläche zwischen der Mittelschicht und der Grundschicht sowie zwischen der Mittelschicht und der Deckschicht. Dabei kann insbesondere die Mittelschicht mit der Grundschicht innig miteinander verwachsen sein, um einen besseren elektrischen Kontakt zwischen Mittelschicht und Grundschicht zu gewährleisten. Durch die Struktur der Mittelschicht und der Grundschicht wird insbesondere eine lange Dreiphasengrenze erreicht, an der die Moleküle der Gasphase für den Fall der Verwendung als Gassensor etwa mit den atomaren Gitterbausteinen der Deckschicht und den atomaren Gitterbausteinen der Mittelschicht chemisch reagieren können. Die Mittelschicht kann beispielsweise eine spezifische Leitfähigkeit aufweisen, die in einem Bereich von ≤ 0,00001 Ohm-1m-1 liegt, und kann somit im Wesentlichen elektrisch nicht leitend sein. Die Leitfähigkeit der Mittelschicht kann auch von der elektrischen Spannung abhängen beziehungsweise durch die elektrische Spannung einstellbar sein.

Unter einer "Deckschicht" kann im Sinne der vorliegenden Erfindung insbesondere eine Schicht verstanden werden, welche als oberste Schicht die Schichtanordnung beziehungsweise insbesondere die Mittelschicht zumindest teilweise abdeckt. Somit ist die Deckschicht vorzugsweise unmittelbar auf der Mittelschicht angeordnet und mit dieser in Kontakt. Dabei kann die Deckschicht die Mittelschicht vorzugsweise vollständig bedecken, oder auch nur einen Teilbereich der Mittelschicht abdecken. Die Deckschicht ist somit insbesondere die Schicht, welche mit der zu vermessenden Substanz, insbesondere einem Fluid, wie etwa einem Gas oder einer Flüssigkeit, in Kontakt kommt beziehungsweise steht und weist somit eine aktive Messoberfläche auf. Die Deckschicht dient somit in dem erfindungsgemäßen Sensor als obere Elektrode beziehungsweise Frontelektrode bei einer entsprechenden Kontaktierung. Als solche ist sie insbesondere in an sich bekannter Weise elektrisch kontaktierbar. Die Deckschicht ist dabei insbesondere porös und weist dabei insbesondere eine offene Porosität auf, um einen Zugang der zu detektierenden Substanzen zu der Mittelschicht beziehungsweise zu der Grenzfläche zwischen der Mittelschicht und der Deckschicht zu ermöglichen.

Die Schichtanordnung kann dabei noch weitere Schichten aufweisen, ohne den Rahmen der Erfindung zu verlassen. Beispielsweise können weitere zwischen der Grundschicht und der Deckschicht angeordnete Mittelschichten oder anderweitig angeordnete Schichten vorgesehen sein, wie dies im Weiteren im Detail erläutert wird. Ferner kann jede der Grundschicht, Mittelschicht oder Deckschicht aus einer geeigneten Zahl an Teilschichten ausgebildet sein, wobei die beschriebenen Merkmale und Eigenschaften für jede der Teilschichten oder für einzelne der Teilschichten möglich sind.

Eine nicht-planare Ausrichtung der Schichtanordnung kann im Sinne der vorliegenden Erfindung ferner insbesondere bedeuten, dass die Schichtanordnung, also insbesondere die Anordnung aufweisend die Grundschicht, die Mittelschicht und die Deckschicht nicht planar beziehungsweise eben ausgerichtet ist, wie dies etwa bei Halbleitersensoren üblich ist, sondern dass die Schichtanordnung und somit insbesondere sämtliche der Grundschicht, der Mittelschicht und der Deckschicht von einer planaren Ausrichtung abweicht. Somit kann die gesamte Schichtanordnung eine Ausrichtung aufweisen, die in geeigneter Weise von einer rein planaren beziehungsweise ebenen Ausrichtung abweicht. Dabei kann im Sinne der vorliegenden Erfindung insbesondere vorgesehen sein, dass die gesamte Schichtanordnung, also im Wesentlichen eine in der Mitte der Schichtanordnung angeordnete Verbindung von einem Ende der Schichtanordnung entlang ihrer Längserstreckung, also im Wesentlichen parallel zu den Schichtgrenzen, bis zu einem entgegengesetzten Ende der Schichtanordnung keine gerade Ebene ausbildet, sondern eine Struktur aufweist, die von einer derartigen geraden Ebene abweicht und die Schichtanordnung dabei im Wesentlichen eine einheitliche Dicke aufweisen kann. Zusätzlich kann etwa die Deckschicht eine Oberfläche mit einer nicht-planaren Ausrichtung aufweisen, wobei hier das Mittel der Oberfläche, gemeint ist, also etwa eine Ausgleichsebene durch die gemittelte Oberfläche. Dies kann etwa realisierbar sein durch eine variable Dicke beispielsweise der Deckschicht. Somit ist im Sinne der vorliegenden Erfindung insbesondere die Schicht beziehungsweise makroskopische Oberfläche als solche gemeint, und nicht lediglich eine Oberfläche, welche insbesondere durch eine mikroskopisch ausgebildete Porosität eine beispielsweise schwammartige und damit nicht-planare Oberfläche aufweisen kann.

Dadurch, dass die gesamte Schichtanordnung eine nicht-planare Struktur aufweist, kann die aktive Messoberfläche der Deckschicht, also der Bereich, welcher mit einem zu vermessenden Gas, beispielsweise, in Kontakt tritt und wechselwirkt und so eine Messung ermöglicht, eine stark vergrößerte Oberfläche aufweisen. Im Detail kann nicht nur dadurch, dass die Deckschicht beispielsweise porös ist, die Oberfläche der Deckschicht vergrößert werden, sondern bereits der Bereich einer Deckschicht, welcher eine aktive Messoberfläche bereitstellt, kann als solches weiter vergrößert werden.

Somit kann bei einer erfindungsgemäßen Sensoranordnung die Sensitivität deutlich gesteigert werden, da sichergestellt werden kann, dass eine deutlich vergrößerte Anzahl, insbesondere sämtliche, an in einem zu vermessenden Gasstrom enthaltener Teilchen beziehungsweise Moleküle mit der aktiven Messoberfläche in Kontakt kommt und somit detektierbar ist. Somit können bei einer vorbeschriebenen Sensoranordnung bereits kleinste Mengen eines zu detektieren Gases sicher ermittelt werden.

Eine Sensitivitätssteigerung gemäß der vorliegenden Erfindung kann dabei folgendermaßen erklärt werden. Erfindungsgemäß kann die Sensitivität beziehungsweise die Messempfindlichkeit beeinflussbar sein durch die absolute Größe des zu detektieren Volumens, also des Volumens, welches für eine Messung zur Verfügung steht, als auch durch die Größe der wechselwirkenden Oberfläche zum Gasvolumen. Durch eine erfindungsgemäße Sensoranordnung kann dabei durch ein im Wesentlichen frei wählbares zu vermessendes Gasvolumen und eine flexibel ausbildbare mit diesem Gasvolumen in Kontakt tretende messempfindliche Oberfläche im Vergleich zu den aus dem Stand der Technik bekannten Sensorelementen die Empfindlichkeit deutlich verbessert werden. Dadurch kann erreicht werden, dass im Wesentlichen alle in einem vorgegebenen Gasvolumen vorhandenen Teilchen beziehungsweise Moleküle in besonders kurzer Zeit nachweisbar beziehungsweise detektierbar sind. Hierzu ist es vorteilhaft, dass alle nachzuweisen Moleküle auf die messempfindliche Oberfläche treffen, und dort wechselwirken können. Dies kann insbesondere durch eine vergrößerte Oberfläche, ausgestaltet durch eine nicht-planare Ausrichtung der Schichtanordnung und dabei auch der Deckschicht, ermöglicht werden. Denn unter Bezugnahme der in einem Volumen unter Normbedingungen enthaltenen Teilchen und unter Anwendung der mittleren freien Weglänge beziehungsweise des Verschiebungsquadrats ist eine Abschätzung dahingehend möglich, dass ein Wasserstoffteilchen, etwa, im Mittel eine Strecke von 1,25cm pro Sekunde zurücklegt. Daraus wird ersichtlich, dass eine Vergrößerung der Oberfläche die Messempfindlichkeit eines Sensorelements signifikant steigern kann.

Darüber hinaus ist die Schichtanordnung bezüglich Sensitivität und Form im Wesentlichen frei wählbar, so dass neben einer deutlich verbesserten Sensitivität auch bezüglich der Form, wie etwa Größe und Geometrie, eine deutlich verbesserte Anpassbarkeit an entsprechende Anwendungsgebiete möglich ist. Insbesondere brauchen bei der Ausstattung einer nicht planaren Oberfläche mit einer aktiven Sensoroberfläche nicht, wie es im Stand der Technik notwendig ist, eine Mehrzahl an kleineren planaren Sensorelementen verwendet werden, um eine nicht planare Oberfläche messtechnisch abzudecken, wobei die Mehrzahl an Sensorelementen aufwändig miteinander verschaltet werden müssen. Vielmehr kann eine einzige Sensoroberfläche, die zwingend nur eine Frontelektrode und eine Rückelektrode benötigt und damit einfach und problemlos kontaktierbar beziehungsweise schaltbar ist, frei anpassbar sein, was eine besonders große Vielfalt und Einfachheit von Messstrukturen ermöglicht.

Ferner kann durch eine nicht-planare Ausrichtung der gesamten Schichtanordnung die messempfindliche Oberfläche deutlich gesteigert beziehungsweise vergrößert werden, wobei jedoch das Bauvolumen eines Sensors nicht signifikant steigen muss, sondern ein derartiger Sensor weiterhin sehr kompakt ausbildbar sein kann. Somit ist nicht nur eine flexible Formgebung der messeempfindlichen Oberfläche möglich, sondern eine derartige Anpassung ist ferner problemlos möglich bei einem weiterhin besonders kompakt ausbildbaren Sensor, was die Anwendungsbreite weiter verbessert.

Der erfindungsgemäße Sensor erlaubt in an sich bekannter Weise durch eine elektrische Kontaktierung der Grundschicht und der Deckschicht und durch das Anlegen einer Spannung an die Grundschicht und die Deckschicht durch eine Leitfähigkeitsmessung und/oder eine Widerstandsmessung eine qualitative und quantitative Ermittlung von zu detektierenden Substanzen. Im Detail kann ein Signal erzeugt werden beispielsweise aus einer elektrischen Wechselstrommessung des Widerstands oder der Leitfähigkeit.

Ein erfindungsgemäßer Sensor beziehungsweise eine erfindungsgemäße Sensoranordnung bietet somit eine ausgezeichnete Selektivität bei gleichzeitig hoher Sensitivität auch bei einer Messung verschiedenster Substanzen, wie etwa verschiedenster Gase, etwa Wasserstoff, Sauerstoff, Kohlenmonoxid, Kohlendioxid, Kohlenwasserstoffen oder flüchtigen organischen Verbindungen (volatile organic compounds, VOC) oder auch Flüssigkeiten, wie etwa Wasser oder Alkohol, beispielsweise in einem Gasgemisch oder Flüssigkeitsgemisch in variablen Konzentrationen, und damit insbesondere derartige Verbindungen, die katalytisch umsetzbar sein können, wobei die obige Aufzählung nicht abschließend ist. Dabei erlaubt der Sensor durch eine geeignete Wahl der Betriebsbedingungen, wie etwa Frequenz oder Spannung, die Messung gewünschter Substanzen ohne störende Einflüsse anderer Substanzen. Somit sind sowohl qualitative, als auch quantitative Messungen von hoher Qualität auf einfache Weise möglich.

Ferner kann der erfindungsgemäße Sensor etwa aufgrund der hohen Sensitivität gute Messergebnisse bereits bei Raumtemperatur beziehungsweise Umgebungstemperatur ermöglichen, so dass ein Aufheizen des Sensors gegenüber Lösungen aus dem Stand der Technik signifikant reduziert oder bestenfalls auf ein Aufheizen vollständig verzichtet werden kann. Dadurch ist der erfindungsgemäße Sensor besonders kostengünstig und sicher zu betreiben und bietet ferner Vorteile bei einer Verwendung für mobile Anwendungen. Denn auf teils schwere und raumintensive Energiespeicher kann verzichtet beziehungsweise deren Bedarf stark eingeschränkt werden.

Darüber hinaus können die vorgenannten Vorteile des Sensors, wie insbesondere die hohe Sensitivität beziehungsweise Selektivität, die gute Anpassbarkeit an das gewünschte Anwendungsgebiet sowie die Vorteile bezüglich der Messbedingungen erzielbar sein bei einer gleichzeitig besonders einfachen und kostengünstigen Herstellbarkeit. Denn insbesondere dadurch, dass die Schichtanordnung durch einfache Herstellverfahren erzeugt werden kann ist der erfindungsgemäße Sensor besonders einfach und kostengünstig herstellbar, was den Sensor als solchen für weite Anwendungsgebiete wirtschaftlich macht. Die Sandwich-Anordnung der Schichten ermöglicht einen besonders einfachen, robusten und kleinen Aufbau des Sensors.

Insbesondere kann die Sensordicke zwischen ≥100µm und ≤ 500µm Mikrometer liegen, wobei die Deckschicht eine Dicke aufweisen kann, die in einem Bereich von ≤ 4µm liegt und /oder wobei die Mittelschicht eine Dicke aufweisen kann, die in einem Bereich von ≤ 10µm liegt und /oder wobei die Grundschicht eine Dicke aufweisen kann, die in einem Bereich von ≤ 500µm liegt. Dies ist gegenüber dem Stand der Technik, insbesondere den elektrochemischen Sensoren, ein erheblicher Vorteil. Neben der ausgesprochenen Einfachheit des Schichtaufbaus kann auf diese Weise durch die geringe Dicke und das damit verbundene Potential zur Miniaturisierung eine besonders große Anwendungsvielfalt und Designfreiheit erlaubt werden, was sich insbesondere auf verschiedenste nicht-planare Formen in vorteilhafter Weise auswirken kann. Der erfindungsgemäße Sensor ist somit auf einfache Weise unmittelbar als Bauteil in gewünschte Bauelemente integrierbar.

Gemäß einer Ausführungsform weist die röhrenförmige Schichtanordnung eine gefaltete oder gewellte Ausrichtung auf. Insbesondere durch eine gefaltete oder gewellte Ausrichtung der Schichtanordnung kann auf einfache Weise eine signifikante Steigerung der zur Verfügung stehenden aktiven Messoberfläche beziehungsweise messsensitiven Oberfläche bewirkt werden. Dabei können derartige Sensorelemente im Wesentlichen problemlos bisher verwendete planare Sensorelemente austauschen, so dass diese sie im Wesentlichen in jede bisher geläufige Anwendung problemlos implementiert werden können. Darüber hinaus sind gewellte beziehungsweise gefaltete Strukturen besonders einfach und definiert an das jeweilige Anwendungsgebiet anpassbar. Eine gefaltete Struktur kann dabei gemäß der vorliegenden Erfindung insbesondere eine Struktur sein, die eine Mehrzahl an insbesondere durchgängigen, also mit nur einer Grundschicht versehenen, Bereichen aufweist, welche in einem Winkel, wie etwa 90°, zueinander angeordnet sind. Ein Beispiel für eine derartige Struktur kann als Zick-Zack-Struktur bezeichnet werden. Eine gewellte Struktur kann im Sinne der vorliegenden Erfindung ferner eine Struktur sein, welche einer gefalteten Struktur ähnlich sein kann, jedoch keine Ecken beziehungsweise Kanten aufweist, sondern insbesondere wellenartig abgerundet ist. Ein Beispiel für eine wellenartige Struktur ist etwa eine an sich bekannte Sinuskurve. Auch Zwischenstufen, welche teilweise wellenförmig und teilweise gefaltet ausgestaltet sind, sind von dieser Ausführungsform umfasst.

Gemäß Anspruch 1 ist die Schichtanordnung röhrenförmig ausgestaltet. In dieser Ausführungsform kann die aktive Messoberfläche somit insbesondere an der Innenseite der röhrenförmigen Struktur angeordnet sein, beziehungsweise diese beispielsweise vollständig bedecken. In dieser Ausführungsform kann ein zu vermessendes Gasvolumen somit von der messsensitiven Oberfläche zumindest zweidimensional im Wesentlichen vollständig umschlossen werden, so dass die Sensitivität der Sensoranordnung noch weiter verbessert werden kann. Beispielsweise kann ein zu vermessendes Gas durch die röhrenartige Struktur gefördert werden, wobei im Wesentlichen jedes Molekül beziehungsweise jedes in dem Gas enthaltene Teilchen mit der messsensitiven Oberfläche in Kontakt gelangt, so dass ein Messverfahren besonders sensitiv sein kann. Es kann beispielsweise vorgesehen sein, dass die gesamte innere Oberfläche der röhrenartigen Struktur von der aktiven Sensoroberfläche bedeckt ist. Eine Röhrenstruktur beziehungsweise eine röhrenförmige Struktur kann dabei eine Struktur sein, welche einen Kanal ausbildet, und dabei einen frei wählbaren Querschnitt beziehungsweise Durchmesser aufweisen kann. Beispielsweise kann die röhrenförmige Struktur einen zylindrischen oder ovalen Umfang oder auch einen eckigen oder auf andere Weise ausgestalteten Umfang aufweisen. Ferner kann die röhrenförmige Struktur ausbildende Material an sich mit einer gefalteten oder gewellten Struktur ausgestaltet sein, so dass in dieser Ausführungsform die Vorteile einer Röhrenstruktur und die Vorteile einer wellenartigen beziehungsweise gefalteten Struktur miteinander kombinierbar sein können. Ein Beispiel für eine röhrenförmige Struktur kann dabei insbesondere eine wabenartige Struktur sein, die ausgestaltet sein kann, wie es von einer Bienenwabe bekannt ist. Diese Struktur kann somit eine Vielzahl von Kanälen unmittelbar benachbart zueinander aufweisen, wodurch ein besonders großes Gasvolumen in besonders kurzer Zeit untersucht werden kann. Auch bei einer wabenartigen Struktur kann die Grundstruktur, welche die Wabenform an sich ausbildet, ebenfalls gefaltet oder gewellt ausgestaltet sein, um die Sensitivität noch weiter zu erhöhen.

In einer weiteren Ausführungsform kann auf einer durchgehenden Grundschicht eine Mehrzahl an voneinander räumlich getrennten Deckschichten eine Mehrzahl an Sensorbereichen ausbilden, wobei die Grundschicht und jede der Deckschichten für eine Leitfähigkeitsmessung und/oder eine Widerstandsmessung elektrisch kontaktierbar sind. In dieser Ausführungsform ist somit eine besonders große Variabilität der Sensoranordnung möglich, wobei ein besonders flexibler und multifunktional einsetzbarer Sensor erzeugt werden kann. Im Detail können, wenn eine Mehrzahl an verschiedenartigen Sensorbereichen ausgebildet wird, eine besonders hohe Sensitivität für verschiedenste Bestandteile eines zu vermessenden Gases erzeugt werden. Dadurch kann nicht nur eine besonders hohe Sensitivität für eine bestimmte Komponente möglich sein, sondern verschiedenste Komponenten können mit einem Sensor besonders genau nachgewiesen werden. Denn es kann jeder Sensorbereich an sich für ein zu vermessendes Gas oder eine Komponente ausgestaltet beziehungsweise maßgeschneidert sein so dass mit einem Sensor eine besonders breite Detektion eines Gases, beispielsweise, möglich ist.

Dabei kann in dieser Ausführungsform der weitere Vorteil erreicht werden, dass eine durchgehende Grundschicht vorhanden ist, welche durch lediglich eine Rückelektrode kontaktierbar sein kann. Auf der durchgehenden Grundschicht kann dabei eine Vielzahl von Deckschichten, gegebenenfalls mit etwa dazwischen liegenden weiteren Schichten, angeordnet sein, so dass die unterschiedlichen Sensorbereiche im Wesentlichen durch die räumlich getrennten, also nicht leitfähig miteinander verbundenen Deckschichten beziehungsweise darunter liegende weitere Schichten ausgebildet werden. Somit kann auch in dieser Ausführungsform bei dem Vorsehen einer Vielzahl unterschiedlicher Sensorbereiche die Herstellung des Sensors wie auch das Messverfahren deutlich vereinfacht werden.

In einer weiteren Ausführungsform können wenigstens zwei Sensorbereiche vorgesehen sein, wobei ein Messwert eines ersten Sensorbereichs durch den Messwert eines zweiten Sensorbereichs verifizierbar ist. In dieser Ausführungsform kann somit ein besonderes sicheres Messverfahren erzeugt werden, da eine Messung nicht ausschließlich durch ein einziges Sensorelement realisiert wird, sondern durch eine Vielzahl, etwa hintereinandergeschalteter Sensorelemente realisierbar ist. Dabei können die Sensorelemente beispielsweise gleich ausgestaltet sein, so dass sie im Wesentlichen die gleiche Komponente messen und somit gegenseitig eine Kontrolle ermöglichen. Alternativ können unterschiedliche Sensorbereiche in Flussrichtung eines zu vermessenden Fluids aufeinanderfolgend angeordnet sein, wobei beispielsweise eine Komponente in beziehungsweise an einem in Flussrichtung stromaufwärts liegenden Sensorbereich beispielsweise katalytisch beziehungsweise chemisch reagiert, und das Reaktionsprodukt in einem in Stromrichtung stromabwärts liegenden Sensorbereich detektiert werden kann. Dadurch kann anhand einer Kontrolle des reagierten Produkts der ersten Komponente die erste Komponente qualitativ und quantitativ indirekt nachgewiesen und das Arbeiten des ersten beziehungsweise des zweiten Sensorelements durch Vergleich der ermittelten Messdaten überprüft werden.

In einer weiteren Ausführungsform kann die Grundschicht wenigstens ein Metall aufweisen, das ausgewählt ist aus der Gruppe umfassend Titan, Vanadium, Chrom, Zirkon, Niob, Molybdän, Tantal und Wolfram oder einer Legierung aus einem oder mehrerer dieser Metalle mit einem oder mehrerer dieser oder weiterer Metalle, wie beispielsweise Aluminium, Palladium, Mangan, Eisen, Nickel, Kobalt, Kupfer oder Seltenerdmetallen. Unter den vorgenannten Metallen kann insbesondere Titan von Vorteil sein. Derartige Substanzen können in einer oxidierenden Atmosphäre spontan eine Konversionsschicht bilden oder insbesondere durch eine elektrochemische Reaktion zur Bildung einer Konversionsschicht angeregt werden, wodurch sie vor einer Oxidation geschützt sind. Daher ist die Grundschicht in dieser Ausführungsform besonders langlebig. Weiterhin lassen sich mit derartigen Materialien schon in geringen Dicken sehr stabile Schichten ausbilden, so dass weitestgehend auf die Verwendung eines weiteren Trägersubstrats, auf dem die Grundschicht angeordnet ist, verzichtet werden kann. Ferner können in dieser Ausgestaltung besonders sensitive Sensorelemente ausbildbar sein, welche problemlos in einer nicht-planaren Ausrichtung formbar und stabil sein können.

In einer weiteren Ausführungsform kann die Mittelschicht eine Konversionsschicht der Grundschicht sein. In dieser Ausführungsform kann der erfindungsgemäße Sensor besonders einfach und kostengünstig hergestellt werden. Beispielsweise kann die Konversionsschicht durch eine elektrochemische Anodisation der Grundschicht, also grundsätzlich durch eine gewollte und insbesondere spezielle und definierte chemische beziehungsweise elektrochemische Behandlung erzeugt werden. Dies ist ein gut beherrschbares, bekanntes, kostengünstiges und auch in großindustriellem Maßstab problemlos verwendbares Verfahren. In diesem Fall wird die Mittelschicht somit aus dem Metalloxid der Grundschicht gebildet. Darüber hinaus ist insbesondere in dieser Ausführungsform die Mittelschicht besonders porös, in dem die Porenweiten in einem Bereich von ≥ 10nm bis ≤ 5000nm eingestellt werden können und ein besonders guter und großflächiger Kontakt zwischen der Grundschicht und der Mittelschicht vorhanden ist, was die Messergebnisse weiter verbessern kann. Die Einstellung der Porengrößen kann dabei beispielsweise durch die Wahl geeigneter Parameter bei der Auftragung beziehungsweise Erzeugung der Mittelschicht erfolgen. Eine Konversionsschicht kann hier im Sinne der Erfindung insbesondere eine Schicht sein, die durch eine elektrochemische oder chemische insbesondere oxidative Reaktion der Grundschicht in einem Fluid, wie insbesondere einem Gas oder einer Flüssigkeit, erzeugbar ist. Darüber hinaus ist in dieser Ausgestaltung eine im Wesentlichen freie Ausgestaltung der Form der Grundschicht und ferner der gesamten Schichtanordnung möglich, da bei einem derartigen Oxidationsverfahren eine Mittelschicht beziehungsweise Konversionsschicht sich unabhängig von der Geometrie, beispielsweise, der Grundschicht ausbilden kann. Somit kann diese Ausgestaltung in besonders vorteilhafter Weise für das Ausbilden einer nicht-planaren Ausrichtung der Schichtanordnung geeignet sein.

In einer weiteren Ausführungsform kann die Deckschicht zumindest teilweise aus einem oder mehreren von elektrisch leitfähigen Kohlenstoffverbindungen, wie insbesondere Graphit, beispielsweise kolloidalem Graphit, oder Kohlenstoff-Nanoröhren, organischen elektrischen Leitern oder Metallen, wie beispielsweise Platin, Palladium, Gold, Ruthenium, Rhodium, Legierungen aus einem oder mehreren der vorgenannten Metalle und/oder geträgerten Metallen in elektrisch leitfähigen Matrizes, oder unedlen Metallen ausgestaltet sein. Insbesondere eine derartige Deckschicht bietet eine gute Leitfähigkeit, die eine hohe Sensitivität und Selektivität des Sensors erlauben kann. Darüber hinaus bietet eine derartige Deckschicht den Vorteil einer leichten und kostengünstigen Aufbringbarkeit auch mit nicht-planarer Ausrichtung und einer hohen Stabilität gegenüber äußeren Einflüssen. Weiterhin kann durch das Verwenden einer aus kolloidalem Graphit erzeugten Deckschicht eine bevorzugte Matrix mit einer für eine Vielzahl von Anwendungen geeigneten insbesondere offenen Porosität geschaffen werden, so dass zum Einen gute Messergebnisse möglich sind durch eine ausgeprägte Diffundierbarkeit der zu vermessenden Substanzen an die Grenzfläche zwischen Mittelschicht und Deckschicht, und ferner der Sensor beziehungsweise die Sensoranordnung besonders gut an verschiedenste zu vermessende Substanzen anpassbar ist.

In einer weiteren Ausführungsform können die Porenweiten der Deckschicht und/oder der Mittelschicht in einem Bereich von ≥ 10nm bis ≤ 5000nm liegen. Dadurch kann erreicht werden, dass eine besonders gute Zugänglichkeit von zu vermessenden Stoffen durch die Deckschicht an die Phasengrenze von Deckschicht und Mittelschicht möglich wird. Ferner kann eine besonders große Sensitivität und Selektivität erzielt werden. Darüber hinaus bietet eine derartige Porenweite eine große Stabilität, so dass die Langlebigkeit der Deckschicht beziehungsweise Mittelschicht und damit des Sensors verbessert werden kann. Die Einstellung der Porosität kann wiederum durch eine geeignete Wahl der Abscheidungsbedingungen beziehungsweise der Bedingungen der Erzeugung der Deckschicht und/oder der Mittelschicht, wie etwa der Anodisation, erfolgen.

In einer weiteren Ausführungsform kann ferner wenigstens ein Additiv vorgesehen sein, das zumindest teilweise in den Poren der Deckschicht angeordnet ist. Durch die Anordnung eines derartigen Additivs kann die erfindungsgemäße Sensoranordnung auf besonders einfache und effektive Weise an zu vermessende Substanzen angepasst werden, indem etwa die Eigenschaften der Deckschicht gezielt verändert beziehungsweise angepasst werden können. Beispielsweise kann als Additiv dabei eine katalytisch aktive Substanz verwendet werden, welche eine die Leitfähigkeit der Schichtanordnung beeinflussende Reaktion der zu detektierenden Substanz insbesondere an der Grenzfläche zwischen Mittelschicht und Deckschicht katalysiert, so dass der Sensor insbesondere für diese Substanz selektiv wird.

Beispielsweise kann das wenigstens eine Additiv ein Edelmetall umfassen beziehungsweise aus diesem bestehen, wie insbesondere Gold, Platin, Palladium, Rhodium, Iridium, Ruthenium oder eine Legierung aus einem oder mehreren der vorgenannten Metalle. Insbesondere derartige Metalle können selektiv als Katalysatoren für definierte zu detektierende Substanzen dienen. Beispielsweise kann mit Goldpartikeln einer Größe, die in einem Bereich von etwa ≥ 2nm bis ≤ 4nm, beispielsweise 3nm liegen kann, Kohlenmonoxid in Luft in einer großen Genauigkeit selektiv nachgewiesen werden.

Ferner kann das wenigstens eine Additiv auf einem Trägermaterial, wie beispielsweise auf aktiviertem Kohlenstoff beziehungsweise Aktivkohle, auf gamma-Aluminiumoxid oder auf Titandioxid, angeordnet sein. Dadurch liegt das wenigstens eine Additiv in definierter Form vor, was ebenfalls definierte Messergebnisse und eine verbesserte Messgenauigkeit erlaubt. Darüber hinaus können in dieser Ausführungsform das beziehungsweise die Additive besonders einfach und verlässlich in den Poren der Deckschicht immobilisiert werden, so dass diese auch nach einer längeren Dauer der Verwendung in den Poren der Deckschicht angeordnet sind. Somit kann auch in dieser Ausführungsform die Langlebigkeit des Sensors weiter verbessert werden. Ein weiterer Vorteil der Verwendung eines Trägermaterials liegt ferner darin, dass das Additiv in einer Form stabilisiert werden kann, in der sich eine definierte und gewünschte katalytische Aktivität einstellt. Dabei kann das Trägermaterial beispielsweise eine Vickershärte in einem Bereich von ≥ 80 HV10 bis ≤ 150 HV10 aufweisen, wobei die Härte abhängig sein kann von dem verwendeten Material. Im Detail können hier nicht einschränkend geeignet sein Titan mit 150 HV 5/30, Wolfram mit > 500 HV 30, Molybdän mit 200-220 HV30, Chrom mit 1100-1300 HV 30 oder Vanadin mit 80-150 HV10. Dadurch kann das Herstellungsverfahren insbesondere bei der gleichzeitigen Herstellung einer Vielzahl von Sensoren erleichtert werden, da das Trägermaterial etwa eine schneidbare Festigkeit aufweist und nicht gesägt werden muss.

Bezüglich weiterer Vorteile und technischer Merkmale der erfindungsgemäßen Sensoranordnung wird hiermit auf die entsprechenden Ausführungen bezüglich des Verfahrens, der Analysevorrichtung, der Verwendung, der Figuren beziehungsweise der Figurenbeschreibung verwiesen.

Gegenstand der vorliegenden Erfindung ist ferner ein Verfahren zum Herstellen einer wie vorstehend beschrieben ausgestalteten Sensoranordnung, umfassend die Verfahrensschritte:
a) Bereitstellen einer Grundschicht,
b) Aufbringen einer porösen Mittelschicht auf zumindest einen Teil der Grundschicht derart, dass die Mittelschicht zumindest teilweise auf der Grundschicht angeordnet ist und mit dieser in Kontakt steht, und
c) Aufbringen einer Deckschicht auf zumindest einen Teil der Mittelschicht derart, dass die Deckschicht zumindest teilweise auf der Mittelschicht angeordnet ist und mit dieser in Kontakt steht, wobei die Deckschicht porös ist.

Das erfindungsgemäße Verfahren ist in besonders vorteilhafter Weise dazu geeignet, eine Sensoranordnung zu erzeugen, bei welcher die Schichtanordnung aufweisend die Grundschicht, die Mittelschicht und die Deckschicht eine nicht-planare Ausrichtung aufweist. Es umfasst somit im Wesentlichen nur drei Verfahrensschritte, nämlich das Bereitstellen einer Grundschicht, das Aufbringen einer Mittelschicht und das Aufbringen einer Deckschicht. Dadurch ist das Verfahren gemäß der vorliegenden Erfindung besonders einfach, schnell und kostengünstig realisierbar. Dabei kann die nicht-planare Form der Schichtanordnung auf besonders einfache Weise durch die Ausgestaltung der Grundschicht, etwa mit nicht-planarer Ausrichtung, vorgegeben werden, so dass besonders definierte Strukturen erzeugbar sein können. Dabei kann bereits die Grundschicht eine nicht-planare Ausrichtung aufweisen, also etwa eine Grundschicht mit einer nicht-planaren Ausrichtung bereitgestellt werden, welche durch die Mittelschicht und die Deckschicht beibehalten wird.

Das erfindungsgemäße Verfahren ist dabei gut beherrschbar, besonders vorteilhaft an das gewünschte Anwendungsgebiet anpassbar und auch für eine Serienproduktion gut geeignet.

Nach Fertigstellen von Verfahrensschritt c) ist die Schichtanordnung der Sensoranordnung im Wesentlichen fertiggestellt. Damit die Sensoranordnung etwa durch Widerstandsmessungen oder durch Leitfähigkeitsmessungen wie gewünscht arbeitet, können insbesondere die Deckschicht und die Grundschicht, bei dem Vorsehen von mehreren Grund- und/oder Deckschichten insbesondere jeweils die äußeren der Schichten, durch elektrische Anschlüsse elektrisch kontaktiert werden. Beispielsweise kann an der Deckschicht und an der Grundschicht jeweils ein Anschluss vorgesehen sein, der über einen elektrischen Leiter, wie etwa einen dünnen Metalldraht, mit einer Spannungsquelle zum Anlegen einer Spannung verbindbar beziehungsweise verbunden ist. Darüber hinaus kann jeweils ein mit einer Spannungsquelle verbindbarer beziehungsweise verbundener elektrischer Leiter direkt an der Grundschicht beziehungsweise der Deckschicht befestigt, wie etwa angelötet, angebondet, angeschweißt oder angeklebt, werden. Ferner kann zweckmäßigerweise eine Strommessvorrichtung beziehungsweise eine Widerstandsmessvorrichtung vorgesehen sein.

Dabei ist für den Fachmann ersichtlich, dass die Verfahrensschritte in einer grundsätzlich beliebigen geeigneten Reihenfolge und gegebenenfalls zumindest teilweise zusammen durchführbar sind.

Gemäß einer Ausführungsform kann das Verfahren, insbesondere bezüglich der Verfahrensschritte a) und b), die Verfahrensschritte umfassen:
d) Bereitstellen eines Elektrolyten;
e) In Kontakt bringen der Grundschicht mit dem Elektrolyten, wobei die Grundschicht eine nicht-planare Ausrichtung aufweist;
f) In Kontakt bringen einer Elektrode mit dem Elektrolyten, wobei
g) die Grundschicht als Anode und die Elektrode als Kathode geschaltet wird,
h) Anlegen einer Spannung zwischen der Elektrode und der Grundschicht für einen vorbestimmten Zeitraum zum Ausbilden einer porösen Oxidschicht als Mittelschicht;
i) Entfernen der Grundschicht mit der in dem Schritt h) gebildeten Mittelschicht von dem Elektrolyten;
j) Aufbringen einer Deckschicht auf zumindest einen Teil der Mittelschicht derart, dass die Deckschicht porös ist.

Durch das erfindungsgemäße Verfahren lässt sich die erfindungsgemäße Sensoranordnung in dieser Ausführungsform besonders einfach und kostengünstig herstellen. Im Detail wird durch elektrochemische Anodisation der Grundschicht die Mittelschicht als Konversionsschicht der Grundschicht erzeugt. Dabei wird während der Anodisation das Metall der Grundschicht oxidiert, weshalb das Oxid des entsprechenden Metalls der Grundschicht als Mittelschicht erzeugt wird. Diese Ausführungsform ist ferner besonders geeignet, um eine nicht-planare Ausgestaltung der Deckschicht zu erzeugen, indem bereits die Grundschicht und/oder Mittelschicht eine nicht-planare Ausrichtung aufweist.

Eine elektrochemische Anodisation ist dabei ein gut beherrschbares und gut definierbares Verfahren, was keine aufwändigen Konstruktionen benötigt. Dadurch lässt sich auf genau definierte Weise eine definierte Konversionsschicht beziehungsweise Mittelschicht auf der Grundschicht aufbringen. Dabei ist das erfindungsgemäße Verfahren durch seine Einfachheit und Kostengünstigkeit auch für Massenproduktionen geeignet und ferner die erzeugten Sensoren für eine besonders große Vielzahl an Anwendungen verwendbar und wirtschaftlich.

Im Detail wird in Schritt d) ein Elektrolyt bereitgestellt. Dies kann beispielsweise eine Lauge oder eine Säure sein. Besonders bevorzugt kann der Elektrolyt eine Säure, wie beispielsweise Schwefelsäure umfassen. Grundsätzlich kann es bevorzugt sein, einen flüssigen Elektrolyten vorzusehen. Dabei kann der Elektrolyt, wie beispielsweise die Schwefelsäure, insbesondere in einem Konzentrationsbereich von ≥ 0,1 Mol/Liter bis ≤ 16Mol/Liter, beispielsweise 14Mol/Liter, verwendet werden. Der Elektrolyt kann dabei beispielsweise als ein Elektrolytbad in einem Behältnis, wie etwa einer Wanne, bereitgestellt werden.

Gemäß Schritt e) wird eine nicht-planare Grundschicht mit dem Elektrolyten in Kontakt gebracht. Das bedeutet, dass das Material, welches in dem fertigen Sensor beziehungsweise in der Schichtanordnung des Sensors die Grundschicht bildet und etwa die Struktur vorgeben kann, mit dem Elektrolyten in Kontakt gebracht wird, also beispielsweise in dem Elektrolyten angeordnet wird, etwa durch Eintauchen. Beispielsweise kann eine geformte Metallfolie als Grundschicht verwendet werden, also etwa für den Fall der Verwendung von Titan für die Grundschicht, eine vorgeformte Titanfolie oder beispielsweise eine Titanröhre mit dem Elektrolyten in Kontakt gebracht, also beispielsweise in den Elektrolyten getaucht werden.

In dem Schritt f) wird gemäß dem erfindungsgemäßen Verfahren in dieser Ausführungsform eine Elektrode mit dem Elektrolyten in Kontakt gebracht, also ebenfalls beispielsweise in den Elektrolyten eingetaucht. Damit soll im Rahmen der Erfindung insbesondere gemeint sein, dass neben der Grundschicht ein weiteres elektrisch leitfähiges Material, wie beispielsweise eine Graphitelektrode, mit dem Elektrolyten in Kontakt gebracht beziehungsweise in diesen getaucht wird.

Dabei oder in einem weiteren Schritt wird gemäß Schritt g) die Grundschicht als Anode und die Elektrode als Kathode geschaltet. Dies kann beispielsweise erreicht werden, indem bei einem Schritt h) in geeigneter Weise eine Spannung zwischen der Elektrode und der Grundschicht zum Ausbilden einer porösen Oxidschicht als Mittelschicht angelegt wird. Dadurch wird erlaubt, dass sich eine Oxidschicht als Konversionsschicht der Grundschicht durch elektrochemische Anodisation bildet, welche die Mittelschicht ausbildet. Beispielsweise kann eine Spannung in einem Bereich von ≥ 50V bis ≤ 200V, insbesondere 170V angelegt werden.

Ferner wird eine angelegte Spannung gemäß Verfahrensschritt h) für einen vorbestimmten Zeitraum beibehalten. Das soll im Sinne der vorliegenden Erfindung insbesondere bedeuten, dass über einen definierten Zeitraum, wie etwa im Bereich von einigen Minuten, beispielsweise in einem Bereich von größer oder gleich 10 Minuten bis kleiner oder gleich 20 Minuten, abhängig von der angelegten Spannung, eine Spannung in beliebiger Größe aufrechterhalten wird, wobei sich die Größe der Spannung beispielsweise während des Verfahrensschrittes h) ändern kann, oder auch konstant gehalten werden kann. Durch das Beibehalten einer angelegten Spannung wird somit eine wachsende Konversionsschicht beziehungsweise Mittelschicht aufgebracht. Die Dicke der aufgebrachten Konversionsschicht beziehungsweise Mittelschicht ist dabei beispielsweise korrespondierend zu der Dauer der angelegten Spannung und damit der Dauer des fließenden Stroms und zu der Größe des fließenden Stroms.

Es ist ersichtlich, dass gemäß dem vorbeschriebenen Verfahren in dieser Ausführungsform die gesamte Oberfläche der Grundschicht konvertiert wird beziehungsweise mit einer Mittelschicht bedeckt werden kann. Für den Fall, dass etwa definierte Strukturen einer Mittelschicht vorgesehen sein sollen, kann die Grundschicht, etwa durch das Vorsehen von entsprechenden Masken, Lacken oder Ähnlichem vor einer ganzheitlichen Konversion geschützt werden, um so etwa die gewünschte Struktur zu erzeugen. Bei dem Erzeugen einer röhrenförmigen Struktur, beispielsweise, kann die Außenseite abgedeckt sein, so dass sich die Mittelschicht beziehungsweise der aktive Sensor nur im Inneren Kanal der Röhrenstruktur ausbildet.

Grundsätzlich ist das vorbeschriebene Verfahren ein modifiziertes PEO-Verfahren (plasma electrolytic oxidation). Bei diesem Verfahren treten elektrische Entladungen auf, die zu einem Auftreten von gasförmigem Sauerstoff führen können, was die Anodisation begünstigt beziehungsweise ermöglicht. Somit kann erfindungsgemäß insbesondere eine plasmaelektrolytische Herstellung der Mittelschicht stattfinden, welche insbesondere bei angelegten Spannungen von ≥ 50V, vorzugsweise von ≥ 100V realisiert werden kann. Dadurch wird ein Verfahren zur Herstellung der Schichtanordnung für den erfindungsgemäßen Sensor verwendet, bei welchem an der Grundschicht lokal sehr hohe Temperaturen und Partialdrücke, etwa von Sauerstoff, auftreten, was ein besonders effektives Verfahren erlaubt. In dieser Ausführungsform werden somit elektrische Entladungen unter Funkenbildung gezielt eingesetzt.

Vorteilhaft bei dem in dieser Ausführungsform angewandten Verfahren der Anodisation ist ferner, dass zwischen der Mittelschicht und der Grundschicht ein sehr inniger Kontakt entsteht, der das Messverhalten des Sensors positiv beeinflusst.

Insbesondere während des Verfahrensschritts h) kann die Stromdichte des fließenden Stroms auf einen Bereich von ≤ 200mAcm⁻² begrenzt sein beziehungsweise werden. Beispielsweise kann für ein Elektrolytgefäß von 50ml und einer Grundschicht der Größe 5mm x 5mm ein maximaler Strom von 200mA vorteilhaft sein. Dabei kann der Strom insbesondere am Anfang der Anodisation begrenzt sein. Die Spannung kann im Verlaufe der Anodisation erhöht werden, wenn der fließende Strom fällt, so dass der Anodisationsstrom konstant bleibt. Eine derartige Strombegrenzung kann insbesondere der Begrenzung der Erwärmung des Elektrolyten dienen, welche beispielsweise durch die elektrische Entladung entstehen kann. Dadurch kann die Genauigkeit der Steuerung des Anodisationsprozesses durch im Wesentlichen konstante Temperaturen verbessert werden.

Diesbezüglich kann es in einer Ausführungsform vorteilhaft sein, dass der Elektrolyt insbesondere während des Schrittes h) gekühlt wird. Beispielsweise kann der Elektrolyt, etwa unter Verwendung eines Rührers wie eines Magnetrührers, gerührt werden, oder es können Kühleinrichtungen, wie beispielsweise ein externer Umwälzkühler, eingesetzt werden. Dadurch können ebenfalls die obengenannten bezüglich einer konstanten Anodisationstemperatur genannten Vorteile erzielt werden.

Dies kann ferner dadurch möglich sein, entsprechend große Elektrolytbäder vorzusehen, in denen die Anodisation durchgeführt wird. Beispielsweise kann das Volumen des Elektrolytbades größer als 200ml/cm² Fläche der Grundschicht betragen.

Nach dem Ende der Konversion beziehungsweise dem Aufbringen der Mittelschicht kann gemäß Verfahrensschritt i) die Grundschicht mit der in dem Schritt h) gebildeten Mittelschicht von dem Elektrolyten entfernt werden. Beispielsweise kann die Anordnung aus Grundschicht und Mittelschicht aus einer Elektrolytflüssigkeit entnommen werden. Zweckmäßigerweise kann die von dem Elektrolyten entfernte Schichtanordnung, etwa durch destilliertes Wasser, von dem Elektrolyten gereinigt werden. Anschließend kann die Schichtanordnung getrocknet werden, beispielsweise durch eine Temperaturbehandlung beispielsweise bei Raumtemperatur oder auch bei erhöhten Temperaturen, wie beispielsweise bei etwa 400°C, beispielsweise für eine Dauer von 20s.

In einem nächsten Schritt wird in dieser Ausführungsform gemäß Verfahrensschritt j) die Deckschicht auf zumindest einen Teil der Mittelschicht aufgebracht. Dies kann auf verschiedenste Weise erfolgen. Geeignete Verfahren umfassen beispielweise, aber nicht beschränkend Aerosolverfahren, Siebdruck, Sputtern, Chemische Gasphasenabscheidung (CVD), Aufdampfen und grundsätzlich Dickschicht- und Dünnschicht-Verfahren, die dem Fachmann als solche bekannt sind. Für den Fall des Auftragens einer kolloidalen Graphitschicht, beispielsweise, kann diese etwa durch einen Sprühauftrag oder durch einen Druckvorgang aufgetragen werden. Grundsätzlich sind jedoch sämtliche Verfahren möglich, mit welchen die entsprechende Deckschicht auf zumindest einen Teil der Mittelschicht aufgebracht beziehungsweise aufgetragen werden kann. Die aufgebrachte Deckschicht kann dann in geeigneter Weise, wenn dies notwendig ist, etwa durch Trocknen, Sintern oder Ähnliches nachbehandelt werden.

Nach Fertigstellen von Verfahrensschritt j) ist die Schichtanordnung des Sensors im Wesentlichen fertiggestellt, so dass ein geeignetes Kontaktieren erfolgen kann.

Dabei ist für den Fachmann ersichtlich, dass die vorgenannten Verfahrensschritte nacheinander oder zeitgleich und in einer geeigneten Reigenfolge durchgeführt werden können.

In einer Ausführungsform kann in Schritt a) eine durchgehende Grundschicht bereitgestellt werden, wobei zumindest in dem Schritt c) eine Mehrzahl Deckschichten zur Ausbildung einer Mehrzahl an Sensoreinheiten ausgebildet wird. In dieser Ausführungsform kann insbesondere eine Sensoranordnung geschaffen werden, welche für verschiedene Komponenten selektiv ist, was eine besonders breite Anwendbarkeit ermöglichen kann. Darüber hinaus können unterschiedliche Sensoreinheiten einen Messwert verifizieren, so dass eine besonders genaue Messung möglich ist.

Bezüglich weiterer Vorteile und technischer Merkmale des erfindungsgemäßen Verfahrens wird hiermit auf die entsprechenden Ausführungen bezüglich der Sensoranordnung, der Analysevorrichtung, der Verwendung, der Figuren beziehungsweise der Figurenbeschreibung verwiesen.

Gegenstand der Erfindung ist ferner eine Analysevorrichtung, aufweisend eine Sensoranordnung, die wie vorstehend beschrieben ausgebildet ist. Dabei kann die Analysevorrichtung beispielsweise eine stationäre Analysevorrichtung sein. Mögliche Anwendungen umfassen hier etwa Gehäuseteile von stationären Anlagen, wie etwa Heizungsanlagen, um Vergiftungen zu verhindern.

Die vorbeschriebene Sensoranordnung kann in einer Ausführungsform auch für eine mobile Analysevorrichtung von Vorteil sein, da die Sensoranordnung einen sehr kompakten Sensor erlaubt, und dabei eine hochsensitive Auswertung ermöglicht. Daher ist eine vorbeschriebene Sensoranordnung insbesondere für eine mobile Vorrichtung, welche vorteilhaft leicht und kompakt ist, in besonders vorteilhafter Weise geeignet. Beispielsweise kann die mobile Analysevorrichtung ein Zusatzteil für einen mobilen Computer, ein Smartphone, oder ein sonstiges Gerät sein. Ferner kann die Sensoranordnung besonders einfach an ein Gehäuse angebracht werden, oder an ein beliebiges Bauteil, welches ohnehin benötigt wird, so dass bei einer derartigen beispielsweise mobilen Analysevorrichtung auf das Vorliegen eines zusätzlichen Bauteils verzichtet werden kann. Darüber hinaus kann in Abhängigkeit der Ausbildung der Schichtanordnung auf ein Heizen der Sensoranordnung verzichtet werden oder die Heizleistung deutlich reduziert werden, so dass die mobile Analysevorrichtung im wesentlichen autark ist und somit beispielsweise auf eine Netzanschluss verzichtet werden kann.

Gegenstand der vorliegenden Erfindung ist ferner die Verwendung einer wie vorstehend beschrieben ausgestalteten Sensoranordnung oder einer wie vorstehend beschrieben ausgestalteten beispielsweise mobilen Analysevorrichtung als Gassensor in der medizinischen Analytik beziehungsweise Diagnostik. Insbesondere in der medizinischen Analytik sind in vielen Anwendungsgebieten hoch sensitive Messungen erwünscht bzw. werden benötigt. Als ein vorteilhaftes, jedoch nicht beschränkendes Beispiel wird die Atemgas-Analyse genannt. Beispielsweise für den Fall einer Kohlenmonoxidvergiftung müssen heutzutage oftmals in aufwändiger Weise Blutproben entnommen und das Blut untersucht werden, um sicherzustellen, dass eine Kohlenmonoxidvergiftung vorliegt. Dadurch, dass die vorbeschriebene Sensoranordnung eine hoch gesteigerte Sensitivität aufweist, ist eine Diagnostik bezüglich einer Kohlenmonoxidvergiftung durch eine einfache Analyse des Atemgases möglich, so dass eine Untersuchung auf eine derartige Vergiftung, beispielsweise, im Wesentlichen überall und besonders kostengünstig möglich sein kann. Grundsätzlich ist die Atemgasanalytik ein vorteilhaftes Anwendungsbeispiel, jedoch sind weitere nichtbeschränkende Beispiele möglich. So ist grundsätzlich eine patientennahe Sofortdiagnostik in einem Krankenhaus oder auch zu Hause möglich. Ferner können Apotheken und Ärzte mit derartigen Geräten kostengünstig ausgestattet werden, um schnelle und hochgenaue Messung zu ermöglichen (Point of Care Testing).

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können, und wobei die Erfindung nicht auf die folgenden Zeichnungen und die folgende Beschreibung beschränkt ist.

Es zeigen:
Fig. 1 eine schematische Darstellung einer Ausführungsform einer erfindungsgemäßen Sensoranordnung;
Fig. 2 eine schematische Darstellung einer weiteren Ausführungsform einer erfindungsgemäßen Sensoranordnung;
Fig. 3 eine schematische Darstellung einer weiteren Ausführungsform einer erfindungsgemäßen Sensoranordnung;
Fig. 4 eine schematische Darstellung einer weiteren Ausführungsform einer erfindungsgemäßen Sensoranordnung, und
Fig. 5 ein Diagramm exemplarisch zeigend den durch eine Ausführungsform einer erfindungsgemäßen Sensoranordnung fließenden Strom als Funktion der Zeit bei einer Variation der gemessenen Kohlenmonoxid-Konzentration.

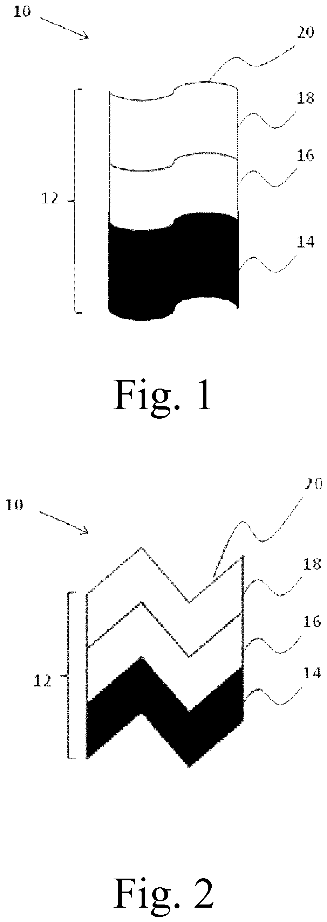

In Figur 1 ist eine beispielhafte schematische Ausführungsform einer röhrenförmigen Sensoranordnung 10 gezeigt. Eine derartige Sensoranordnung 10 kann beispielsweise Bestandteil sein einer insbesondere mobilen Analysevorrichtung. Die Sensoranordnung 10 beziehungsweise die Analysevorrichtung kann dabei Verwendung finden in einem breiten Anwendungsgebiet, etwa und nicht beschränkend in der medizinischen Diagnostik.

Die Sensoranordnung 10 umfasst eine Schichtanordnung 12, wobei die Schichtanordnung 12 eine Grundschicht 14, eine Mittelschicht 16 und eine Deckschicht 18 aufweist. Dabei ist die Mittelschicht 16 zumindest teilweise auf der Grundschicht 14 angeordnet und steht mit dieser in Kontakt. Ferner ist die Deckschicht 18 zumindest teilweise auf der Mittelschicht 16 angeordnet und steht mit dieser in Kontakt. Ferner ist die Grundschicht 14 und die Deckschicht 18 für eine Leitfähigkeitsmessung und/oder eine Widerstandsmessung elektrisch kontaktierbar. Dabei weist insbesondere die Deckschicht 18 eine aktive Messoberfläche 20 auf.

Die Sensoranordnung 10 kann dabei wenigstens zwei Sensorbereiche aufweisen, wobei ein Messwert eines ersten Sensorbereichs durch einen zweiten Sensorbereich verifizierbar ist.

Die Grundschicht 14 kann beispielsweise wenigstens ein Metall aufweisen, das ausgewählt ist aus der Gruppe umfassend oder bestehend aus Titan, Vanadium, Chrom, Zirkon, Niob, Molybdän, Tantal und Wolfram oder einer Legierung aus einem oder mehrerer dieser Metalle mit einem oder mehrerer dieser oder weiterer Metallen, wie beispielsweise Aluminium, Palladium, Mangan, Eisen, Nickel, Kobalt, Kupfer oder Seltenerdmetallen. Ferner kann die Mittelschicht 16 eine Konversionsschicht der Grundschicht 14 sein. Weiterhin kann die Deckschicht 18 zumindest teilweise aus einem oder mehreren von elektrisch leitfähigen Kohlenstoffverbindungen, organischen elektrischen Leitern oder Metallen ausgestaltet sein.

Bezüglich der Schichtanordnung 12 des Sensors beziehungsweise der Sensoranordnung 10 beziehungsweise insbesondere der Mittelschicht 16 und der Deckschicht 18 können diese an ihrem Übergang einen Ohmschen Kontakt aufweisen, der mit Bezug auf eine Leitfähigkeitsbeziehungsweise Widerstandsmessung eine lineare Strom-Spannungskennlinie ausbildet. Dies kann insbesondere dadurch erreicht werden, dass die Austrittsarbeit, also insbesondere der Energieunterschied zwischen dem Vakuum-Niveau und der Fermi-Energie, der Deckschicht 18 niedriger als die der Mittelschicht 16 ist oder dass die Elektronen durch eine sehr dünne Tunnelbarriere zwischen der Deckschicht 18 und der Mittelschicht 16 tunneln können, wenn die Austrittsarbeit der Deckschicht 18 größer ist als die der Mittelschicht 16.

In der erfindungsgemäßen Sensoranordnung 10 wird die Leitfähigkeit und damit das Messverhalten insbesondere durch die Schichtstruktur 12 bestimmt. Wesentlich für die Funktion und das Messverhalten des Sensors können insbesondere Grenzflächenreaktionen an oder nahe von Grenzflächen aus einem Leiter und einem Oxid, beispielsweise, sein, also von der Grenzfläche der Mittelschicht 16 und der Deckschicht 18. Auf dem Oxid der Mittelschicht 16, beispielsweise, bilden sich etwa in der Luft Adsorbate, beispielsweise durch Chemiesorption von Sauerstoff. Diese reagieren mit den nachzuweisenden Gasen, wenn bestimmte Spannungen am Sensor beziehungsweise an der Grundschicht 14 und der Deckschicht 18 anliegen. Es können sich auch mit den nachzuweisenden Gasen elektroaktive Adsorbate an der Grenzfläche bilden, die die elektrische Leitfähigkeit durch Aufnahme oder Abgabe von Elektronen verändern. Die Schichtanordnung 12 stellt dabei insbesondere einen Widerstand beziehungsweise einen Kondensator dar.

Insbesondere bei einer derartigen Sensoranordnung 10 kann durch eine Änderung der Frequenz der anliegenden Wechselspannung insbesondere eine qualitative Messung einer Substanz in einem Substanzgemisch, wie etwa eines Gases in einem Gasgemisch, möglich sein. Durch eine geeignete Wahl der entsprechenden Frequenz können hier verschiedene Substanzen diskriminiert werden, was die Detektion weiterer Gase ermöglicht. Eine derartige qualitative Messung ist ferner ebenfalls bei einer Wahl der bei einer Messung angelegten Spannung möglich. Somit ergibt sich eine qualitative Messung beispielsweise durch eine Anpassung von Frequenz und/oder Spannung, wohingegen insbesondere die Stärke der Leitfähigkeitsveränderung beziehungsweise Widerstandsveränderung ein Maß für eine quantitative Messung darstellt. Damit ergibt sich prinzipiell die Möglichkeit, die Empfindlichkeit beziehungsweise Sensitivität des Sensors etwa für verschiedene Gase oder sonstige zu detektierende Substanzen über die angelegte Spannung beziehungsweise Frequenz zu steuern und die Querempfindlichkeit zu anderen Substanzen wie etwa Gasen so zu verringern. Dadurch kann ebenfalls eine sehr gute Selektivität für die zu detektierenden Substanzen ermöglicht werden. So können beispielsweise Wasserstoff und relative Feuchte beziehungsweise Wasser als nicht beschränkende Beispiele etwa durch unterschiedliche Spannungen spezifisch beziehungsweise einzeln und unabhängig voneinander in hoher Selektivität und Sensitivität auch nebeneinander in einem Gemisch detektiert werden.

Es ist ferner vorteilhaft, wenn die Deckschicht 18 und/oder die Mittelschicht 16, bei dem Vorsehen von einer Mehrzahl an Deck- oder Mittelschichten beispielsweise die jeweils äußeren Schichten, porös ist und dabei insbesondere Porenweiten in einem Bereich von ≥ 10nm bis ≤ 5000nm aufweisen und so eine schwammartige Struktur aufweisen. Es kann ferner ein Additiv wie insbesondere eine katalytisch aktive Substanz vorgesehen sein, das zumindest teilweise in den Poren der Deckschicht 18 angeordnet ist.

In Figur 1 ist ferner gezeigt ist, dass die röhrenförmige Schichtanordnung 12 eine nicht-planare Ausrichtung aufweist. Im Detail ist in Figur 1 gezeigt, dass die Schichtanordnung 12 eine wellenförmige Ausrichtung aufweist. Somit ist zu sehen, dass ein Gas sowohl mikroskopisch, insbesondere in Poren der Deckschicht 18, eingeschlossen werden kann, aber auch zumindest teilweise makroskopisch durch eine Vergrößerung der Oberfläche durch die nicht-planare Ausrichtung der Schichtanordnung 12 und damit ebenfalls der Deckschicht 18.

Entsprechend kann die röhrenförmige Schichtanordnung 12 eine gefaltete Ausrichtung aufweisen, wie dies in Figur 2 gezeigt ist.

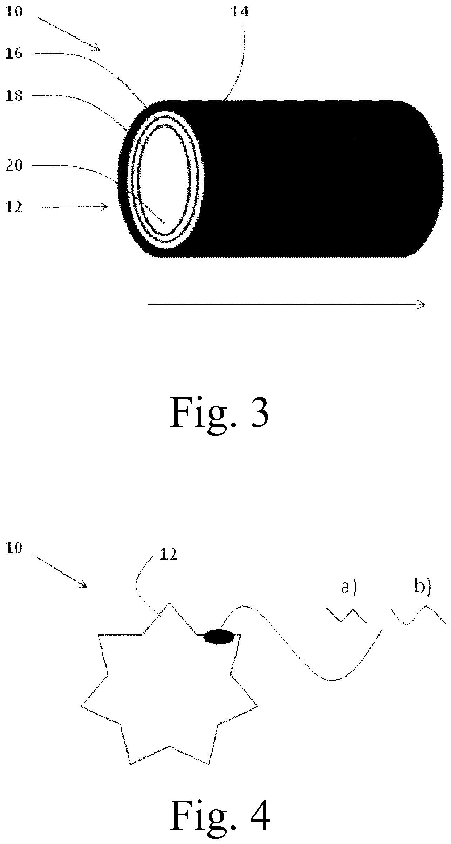

Eine weitere Ausgestaltung einer Sensoranordnung ist in Figur 3 gezeigt. Figur 3 zeigt dabei, dass die Schichtanordnung 12 röhrenförmig ausgestaltet ist. Es ist zu erkennen, dass die Deckschicht 18 im Inneren der röhrenartigen Struktur angeordnet ist und dass die Außenwandung der röhrenartigen Struktur durch die Grundschicht 14 gebildet ist. Somit ist die aktive Messoberfläche 20 im Inneren der röhrenartigen Struktur angeordnet und kommt mit einem Gas, welches durch den Kanal der röhrenartigen Struktur gefördert wird, wie dies die Richtung des Pfeils in Figur 3 andeutet, in Kontakt.

In Figur 4 ist eine weitere Ausführungsform einer Sensoranordnung 10 gezeigt, welche eine röhrenförmige Struktur aufweist. Gemäß Figur 4 ist die röhrenförmige Struktur dabei nicht zylindrisch, wie dies in der Figur 3 gezeigt ist, sondern weist eine sternartige Struktur auf. Ferner kann die Struktur als solche, welche die röhrenartige Struktur ausbildet, selbst gefaltet oder gewellt oder andersartig geformt sein, wie dies durch die vergrößerten Ausschnitte a) und b) in Figur 4 gezeigt ist.

Die Sensoranordnung 10 kann ferner auf einer durchgehenden Grundschicht 14 eine Mehrzahl an voneinander getrennten Deckschichten 18 eine Mehrzahl an Sensorbereichen aufweisen, wobei die Grundschicht 14 und jede der Deckschichten 18 für eine Leitfähigkeitsmessung und/oder eine Widerstandsmessung elektrisch kontaktierbar sind.

Ein Verfahren zum Herstellen einer derartigen Sensoranordnung kann grundsätzlich die folgenden Verfahrensschritte umfassen:
a) Bereitstellen einer Grundschicht 14, wobei die Grundschicht eine nicht-planare Ausrichtung aufweist,
b) Aufbringen einer porösen Mittelschicht 16 auf zumindest einen Teil der Grundschicht 14 derart, dass die Mittelschicht 16 zumindest teilweise auf der Grundschicht 14 angeordnet ist und mit dieser in Kontakt steht, und
c) Aufbringen einer Deckschicht 18 auf zumindest einen Teil der Mittelschicht 16 derart, dass die Deckschicht 18 zumindest teilweise auf der Mittelschicht 16 angeordnet ist und mit dieser in Kontakt steht, wobei die Deckschicht 18 porös ist.

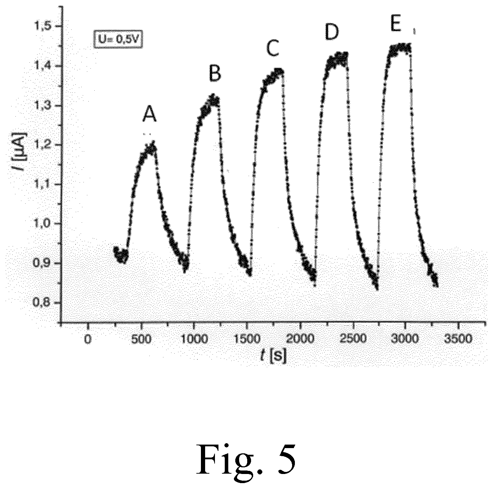

Ein mit einer Analysevorrichtung umfassend eine vorbeschriebene Sensoranordnung 10 durchgeführte Messung zur Detektion von Kohlenmonoxid ist in Figur 5 gezeigt. Für Figur 5 wurde eine röhrenförmige Schichtanordnung verwendet, welche eine für die vorliegende Erfindung vorteilhafte, aber nur exemplarische, Schichtanordnung aufweisend Titan als Grundschicht 14, Titandioxid als Mittelschicht 16 und Platin als Deckschicht 18 umfasst. Im Detail wurde eine Spannung von 0,5V angelegt und dabei der Strom gemessen und hier gegen die Zeit aufgetragen. Dabei wurden Konzentrationen von Kohlenmonoxid in einem Bereich von 1ppm (A), 2ppm (B), 3ppm (C), 4ppm (D) und 5ppm (E) gemessen. Es ist dabei ersichtlich, dass schon geringste Konzentrationen an Kohlenmonoxid, beispielsweise, nachweisbar sind, was die beschriebene Sensoranordnung 10 beispielsweise anwendbar macht für eine Kohlenmonoxid-Detektion im Rahmen einer Atemgas-Analytik zur Diagnostik von Kohlenmonoxid-Vergiftungen.

## Patentansprüche

1. Sensoranordnung mit einer Schichtanordnung (12), wobei die Schichtanordnung (12) eine Grundschicht (14), eine Mittelschicht (16) und eine Deckschicht (18) aufweist, wobei die Mittelschicht (16) zumindest teilweise auf der Grundschicht (14) angeordnet ist und mit dieser in Kontakt steht und wobei die Deckschicht (18) zumindest teilweise auf der Mittelschicht (16) angeordnet ist und mit dieser in Kontakt steht, wobei die Grundschicht (14) und die Deckschicht (18) für eine Leitfähigkeitsmessung und/oder eine Widerstandsmessung elektrisch kontaktierbar sind, wobei die Mittelschicht (16) porös ist, wobei die Deckschicht (18) porös ist und eine aktive Messoberfläche (20) aufweist, und wobei die Schichtanordnung (12) eine nicht-planare Ausrichtung aufweist, **dadurch gekennzeichnet, dass**
die Schichtanordnung (12) röhrenförmig ausgestaltet ist.

2. Sensoranordnung nach Anspruch 1, **dadurch gekennzeichnet, dass** die röhrenförmige Schichtanordnung (12) zusätzlich eine gefaltete oder gewellte Ausrichtung aufweist.

3. Sensoranordnung nach einem der Ansprüche 1 oder 2, **dadurch gekennzeichnet, dass** auf einer durchgehenden Grundschicht (14) eine Mehrzahl an voneinander räumlich getrennten Deckschichten (18) eine Mehrzahl an Sensorbereichen ausbildet, wobei die Grundschicht (14) und jede der Deckschichten (18) für eine Leitfähigkeitsmessung und/oder eine Widerstandsmessung elektrisch kontaktierbar sind.

4. Sensoranordnung nach Anspruch 3, **dadurch gekennzeichnet, dass** wenigstens zwei Sensorbereiche vorgesehen sind, wobei ein Messwert eines ersten Sensorbereichs durch den Messwert eines zweiten Sensorbereichs verifizierbar ist.

5. Sensoranordnung nach einem der Ansprüche 1 bis 4, **dadurch gekennzeichnet, dass** die Grundschicht (14) wenigstens ein Metall aufweist, das ausgewählt ist aus der Gruppe umfassend Titan, Vanadium, Chrom, Zirkon, Niob, Molybdän, Tantal und Wolfram oder einer Legierung aus einem oder mehrerer dieser Metalle mit einem oder mehrerer dieser oder weiterer Metalle, wie beispielsweise Aluminium, Palladium, Mangan, Eisen, Nickel, Kobalt, Kupfer oder Seltenerdmetallen.

6. Sensoranordnung nach einem der Ansprüche 1 bis 5, **dadurch gekennzeichnet, dass** die Mittelschicht (16) eine Konversionsschicht der Grundschicht (14) ist.

7. Sensoranordnung nach einem der Ansprüche 1 bis 6, **dadurch gekennzeichnet, dass** die Deckschicht (18) zumindest teilweise aus einem oder mehreren von elektrisch leitfähigen Kohlenstoffverbindungen, organischen elektrischen Leitern oder Metallen ausgestaltet ist.

8. Sensoranordnung nach einem der Ansprüche 1 bis 7, **dadurch gekennzeichnet, dass** die Porenweiten der Deckschicht (18) und/oder der Mittelschicht (16) in einem Bereich von ≥ 10nm bis ≤ 5000nm liegen.

9. Sensoranordnung nach einem der Ansprüche 1 bis 8, **dadurch gekennzeichnet, dass** wenigstens ein Additiv vorgesehen ist, das zumindest teilweise in den Poren der Deckschicht (18) angeordnet ist.

10. Verfahren zum Herstellen einer Sensoranordnung (10) mit einer Schichtanordnung (12) nach einem der Ansprüche 1 bis 9, umfassend die Verfahrensschritte:
a) Bereitstellen einer Grundschicht (14),
b) Aufbringen einer porösen Mittelschicht (16) auf zumindest einen Teil der Grundschicht (14) derart, dass die Mittelschicht (16) zumindest teilweise auf der Grundschicht (14) angeordnet ist und mit dieser in Kontakt steht, und
c) Aufbringen einer Deckschicht (18) auf zumindest einen Teil der Mittelschicht (16) derart, dass die Deckschicht (18) zumindest teilweise auf der Mittelschicht (16) angeordnet ist und mit dieser in Kontakt steht, wobei die Deckschicht (18) porös ist, **dadurch gekennzeichnet, dass**
die Schichtanordnung (12) röhrenförmig ausgestaltet ist.

11. Verfahren nach Anspruch 10, umfassend die Verfahrensschritte:
d) Bereitstellen eines Elektrolyten;
e) In Kontakt bringen der Grundschicht (14) mit dem Elektrolyten, wobei die Grundschicht eine nicht-planare Ausrichtung aufweist;
f) In Kontakt bringen einer Elektrode mit dem Elektrolyten, wobei
g) die Grundschicht (14) als Anode und die Elektrode als Kathode geschaltet wird,
h) Anlegen einer Spannung zwischen der Elektrode und der Grundschicht (14) für einen vorbestimmten Zeitraum zum Ausbilden einer porösen Oxidschicht als Mittelschicht (16);
i) Entfernen der Grundschicht (14) mit der in dem Schritt h) gebildeten Mittelschicht (16) von dem Elektrolyten;
j) Aufbringen einer Deckschicht (18) auf zumindest einen Teil der Mittelschicht (16) derart, dass die Deckschicht (18) porös ist.

12. Analysevorrichtung, aufweisend eine Sensoranordnung (10) nach einem der Ansprüche 1 bis 9.

13. Analysevorrichtung nach Anspruch 12, **dadurch gekennzeichnet, dass** die Analysevorrichtung eine mobile Analysevorrichtung ist.

14. Analysevorrichtung nach einem der Ansprüche 12 oder 13 zur Verwendung als Gassensor in der medizinischen Diagnostik, insbesondere zur Verwendung in der Atemgasanalyse.

## Claims

1. Sensor arrangement having a layer arrangement (12), wherein the layer arrangement (12) has a bottom layer (14), a middle layer (16) and a top layer (18), wherein the middle layer (16) is arranged at least partially on the bottom layer (14) and is in contact therewith, and wherein the top layer (18) is arranged at least partially on the middle layer (16) and is in contact therewith, wherein the bottom layer (14) and the top layer (18) are electrically contactable for conductivity measurement and/or resistance measurement, wherein the middle layer (16) is porous, wherein the top layer (18) is porous and has an active measuring surface (20), and wherein the layer arrangement (12) has a non-planar orientation, **characterized in that** the layer arrangement (12) is configured in a tubular manner.

2. Sensor arrangement according to Claim 1, **characterized in that** the tubular layer arrangement (12) additionally has a folded or corrugated orientation.

3. Sensor arrangement according to either of Claims 1 and 2, **characterized in that** a plurality of cover layers (18) that are spatially separate from one another form a plurality of sensor regions on a continuous bottom layer (14), wherein the bottom layer (14) and each of the top layers (18) are electrically contactable for conductivity measurement and/or resistance measurement.

4. Sensor arrangement according to Claim 3, **characterized in that** at least two sensor regions are provided, wherein a measured value of a first sensor region is able to be verified by the measured value of a second sensor region.

5. Sensor arrangement according to one of Claims 1 to 4, **characterized in that** the bottom layer (14) exhibits at least one metal which is selected from the group comprising titanium, vanadium, chromium, zirconium, niobium, molybdenum, tantalum and tungsten or an alloy of one or more of these metals with one or more of these or other metals, for example aluminium, palladium, manganese, iron, nickel, cobalt, copper or rare-earth metals.

6. Sensor arrangement according to one of Claims 1 to 5, **characterized in that** the middle layer (16) is a conversion layer of the bottom layer (14).

7. Sensor arrangement according to one of Claims 1 to 6, **characterized in that** the top layer (18) is formed at least partially from one or more of electrically conductive carbon compounds, organic electrical conductors or metals.

8. Sensor arrangement according to one of Claims 1 to 7, **characterized in that** the pore widths of the top layer (18) and/or of the middle layer (16) are in a range from ≥ 10 nm to ≤ 5000 nm.

9. Sensor arrangement according to one of Claims 1 to 8, **characterized in that** at least one additive is provided, which is arranged at least partially in the pores of the top layer (18).

10. Method for producing a sensor arrangement (10) having a layer arrangement (12) according to one of Claims 1 to 9, comprising the method steps of:
a) providing a bottom layer (14),
b) applying a porous middle layer (16) to at least a part of the bottom layer (14) such that the middle layer (16) is arranged at least partially on the bottom layer (14) and is in contact therewith, and
c) applying a top layer (18) to at least a part of the middle layer (16) such that the top layer (18) is arranged at least partially on the middle layer (16) and is in contact therewith, wherein the top layer (18) is porous, **characterized in that** the layer arrangement (12) is configured in a tubular manner.

11. Method according to Claim 10, comprising the method steps of:
d) providing an electrolyte;
e) bringing the bottom layer (14) into contact with the electrolyte, wherein the bottom layer has a non-planar orientation;
f) bringing an electrode into contact with the electrolyte, wherein
g) the bottom layer (14) is connected up as the anode and the electrode is connected up as the cathode,
h) applying a voltage between the electrode and the bottom layer (14) for a predetermined time in order to form a porous oxide layer as the middle layer (16);
i) removing the bottom layer (14), together with the middle layer (16) formed in step h), from the electrolyte;
j) applying a top layer (18) to at least a part of the middle layer (16) such that the top layer (18) is porous.

12. Analysis device having a sensor arrangement (10) according to one of Claims 1 to 9.

13. Analysis device according to Claim 12, **characterized in that** the analysis device is a mobile analysis device.

14. Analysis device according to either of Claims 12 or 13 for use as a gas sensor in medical diagnostics, in particular for use in breathing gas analysis.

## Revendications

1. Dispositif de capteur avec une disposition en couches (12), dans lequel la disposition en couches (12) présente une couche de base (14), une couche intermédiaire (16) et une couche de recouvrement (18) ;
dans lequel la couche intermédiaire (16) est disposée, tout au moins en partie, sur la couche de base (14) et se trouve en contact avec celle-ci ; et
dans lequel la couche de recouvrement (18) est disposée, tout au moins en partie, sur la couche intermédiaire (16) et se trouve en contact avec celle-ci ;
dans lequel la couche de base (14) et la couche de recouvrement (18) peuvent être mises en contact de manière électrique pour une mesure de la conductivité et/ou une mesure de la résistance ;
dans lequel la couche intermédiaire (16) est poreuse ;
dans lequel la couche de recouvrement (18) est poreuse et présente une surface de mesure (20) active ; et
dans lequel la disposition en couches (12) présente une orientation non planaire ;
**caractérisé en ce que** la disposition en couches (12) est configurée sous une forme tubulaire.

2. Dispositif de capteur selon la revendication 1, **caractérisé en ce que** la disposition en couches (12), laquelle est configurée sous une forme tubulaire, présente en outre une orientation pliée ou ondulée.

3. Dispositif de capteur selon l'une des revendications 1 ou 2, **caractérisé en ce que**, sur une couche de base (14) continue, une pluralité de couches de recouvrement (18), lesquelles sont séparées les unes des autres dans l'espace, forme une pluralité de zones de capteurs ;
dans lequel la couche de base (14) et chacune des couches de recouvrement (18) peuvent être mises en contact de manière électrique pour une mesure de la conductivité et/ou une mesure de la résistance.

4. Dispositif de capteur selon la revendication 3, **caractérisé en ce qu'**au moins deux zones de capteurs sont prévues ;
dans lequel une valeur de mesure d'une première zone de capteurs peut être vérifiée par l'intermédiaire de la valeur de mesure d'une deuxième zone de capteurs.

5. Dispositif de capteur selon l'une des revendications 1 à 4, **caractérisé en ce que** la couche de base (14) présente au moins un métal, lequel est sélectionné à partir du groupe constitué par le titane, le vanadium, le chrome, le zircon, le niobium, le molybdène, le tantale et le wolfram, ou à partir d'un alliage constitué de l'un ou de plusieurs de ces métaux avec l'un ou plusieurs de ces métaux ou avec un ou plusieurs autres métaux, tels que par exemple l'aluminium, le palladium, le manganèse, le fer, le nickel, le cobalt, le cuivre ou des métaux de terres rares.

6. Dispositif de capteur selon l'une des revendications 1 à 5, **caractérisé en ce que** la couche intermédiaire (16) est une couche de conversion de la couche de base (14).

7. Dispositif de capteur selon l'une des revendications 1 à 6, **caractérisé en ce que** la couche de recouvrement (18) est configurée, tout au moins en partie, à partir d'un ou de plusieurs composés de carbone électriquement conducteurs, ou à partir d'un ou de plusieurs conducteurs électriques, organiques ou d'un ou de plusieurs métaux.

8. Dispositif de capteur selon l'une des revendications 1 à 7, **caractérisé en ce que** les tailles des pores de la couche de recouvrement (18) et/ou de la couche intermédiaire (16) se situent dans une plage comprise entre ≥ 10 nm et ≤ 5000 nm.

9. Dispositif de capteur selon l'une des revendications 1 à 8, **caractérisé en ce qu'**au moins un additif est prévu, lequel est disposé, tout au moins en partie, dans les pores de la couche de recouvrement (18).

10. Procédé destiné à la fabrication d'un dispositif de capteur (10) avec une disposition en couches (12) selon l'une des revendications 1 à 9, comprenant les phases de procédé suivantes :
a) la mise en oeuvre d'une couche de base (14) ;
b) la mise en place d'une couche intermédiaire (16) poreuse sur tout au moins une partie de la couche de base (14), de telle sorte que la couche intermédiaire (16) est disposée, tout au moins en partie, sur la couche de base (14) et se trouve en contact avec celle-ci ; et
c) la mise en place d'une couche de recouvrement (18) sur tout au moins une partie de la couche intermédiaire (16), de telle sorte que la couche de recouvrement (18) est disposée, tout au moins en partie, sur la couche intermédiaire (16) et se trouve en contact avec celle-ci ;
dans lequel la couche de recouvrement (18) est poreuse ; **caractérisé en ce que** la disposition en couches (12) est configurée sous une forme tubulaire.

11. Procédé selon la revendication 10, comprenant les phases de procédé :
d) la mise en oeuvre d'un électrolyte ;
e) la mise en contact de la couche de base (14) avec l'électrolyte, dans lequel la couche de base présente une orientation non planaire ;
f) la mise en contact d'une électrode avec l'électrolyte ; dans lequel
g) la couche de base (14) est connectée sous la forme d'une anode et l'électrode est connectée sous la forme d'une cathode ;
h) l'application d'une tension entre l'électrode et la couche de base (14) pour une durée prédéterminée en vue de la formation d'une couche d'oxydation poreuse, laquelle se présente sous la forme d'une couche intermédiaire (16) ;
i) la suppression de la couche de base (14) avec la couche intermédiaire (16), laquelle a été formée durant la phase h), de l'électrolyte ;
j) la mise en place d'une couche de recouvrement (18) sur tout au moins une partie de la couche intermédiaire (16), de telle sorte que la couche de recouvrement (18) est poreuse.

12. Dispositif pour analyses, présentant un dispositif de capteur (10) selon l'une des revendications 1 à 9.

13. Dispositif pour analyses selon la revendication 12, **caractérisé en ce que** le dispositif pour analyses est un dispositif mobile pour analyses.

14. Dispositif pour analyses selon l'une des revendications 12 ou 13 en vue d'une utilisation sous la forme d'un détecteur de gaz dans les diagnostics médicaux, en particulier en vue d'une utilisation dans l'analyse respiratoire.
